# EUROPEAN PATENT APPLICATION

(11) **EP 2 570 962 A1**
(43) Date of publication of application: **20.03.2013**
(21) Application number: 11181271.5
(22) Date of filing: 14.09.2011
(51) Int. Cl.: G06K 9/00

(54) **Video analysis**

(71) Applicant: Axis AB, 223 69 Lund (SE)
(72) Inventor: Hugosson, Fredrik, SE-234 38 LOMMA (SE)
(74) Representative: Bratt, Hanna Catharina

(57) **Abstract**

A background model representing a background of a scene being captured by means of an imaging device is updated by accessing data representing a captured image of the scene, accessing background model data, determining coordinates of the captured image in relation to the background model, wherein the background model comprises information representing both the background of the scene being captured and the background of at least one area outside the scene being captured, and updating the background model data based on the captured image and the coordinates of the captured image.

## Description

### Technical field of the invention

The present invention relates to methods and devices for video analysis.

### Background of the invention

Image processing is commonly used in surveillance cameras, e.g. to detect motion within a certain area covered by one or more cameras. One of the functions often implemented is the function of identifying objects moving through a scene or passing a camera view. There are several known methods for identifying objects in a scene. One common way to analyze a video stream is by dividing it into a number of frames, and by comparing consecutive frames using change detection algorithms. In this way the background may be eliminated and changes occurring by movement of an object may be identified. The background of the monitored scene represents all fixed or stationary features and areas of the camera view and the basic idea for detecting objects moving in the scene is to compare each pixel in a new image of a video sequence with the corresponding pixel in the background to detect changes. Such method may be referred to as change detection, foreground/background segmentation or background subtraction.

However, a problem when using a moving surveillance camera is that the moving camera causes changes all over the image, meaning that the separation into background and foreground (objects) becomes more complicated than for a fixed camera and takes up more processing power and time, this since the background of the scene will also change between each movement of the camera.

US 7,457,433 discloses a method where conventional static camera algorithms may be used for treating output from a moving cameras by first compositing a plurality of frames from a video sequence to form a mosaic image, then compositing all successively taken video frames to form an output sequence of successive mosaic images and finally using conventional algorithms developed for static cameras to treat the mosaic image.

However, there is still a need for improved methods for analyzing images taken by moving cameras in terms of reduced processing power and time.

### Summary of the invention

An object of the present invention is to improve image analysis and tracking of objects in a scene captured by a surveillance camera.

This and further objects are achieved by a method of updating a background model according to claim 1, by means of a background model updater according to claim 9, and by means of a video analyzer according to claim 15. Further embodiments of the invention are presented in the dependent claims.

In particular, according to a first aspect of the invention, the method of updating a background model representing a background of a scene being captured by means of an imaging device comprises the steps of
accessing data representing a captured image of the scene,
accessing background model data,
determining coordinates of the captured image in relation to the background model, wherein the background model comprises information representing both the background of the scene being captured and the background of at least one area outside the scene being captured, and
updating the background model data based on the captured image and the coordinates of the captured image.

As the background model is maintained and reused from one captured image to another, also when the camera has moved its view between the images, the time and effort spent for identifying objects in relation to the background in a scene is effectively reduced, meaning that the detection of objects will be faster and take up less computing resources.

The step of accessing data representing a captured image of the scene may comprise accessing data representing a captured image having at least one image area overlapping at least part of a previously captured image for which coordinates in relation to the background model are known, and the step of determining the coordinates of the captured image may comprise comparing the captured image to the previously captured image to determine the coordinates of the overlapping area in relation to the previously captured image and thereby determining the coordinates of the captured image in relation to the background model. The comparison may be done on an image element (pixel) per image element basis. This provides an efficient manner of determining the coordinates by using "stitching" algorithms. This may be particularly useful in case a mechanically pan and tiltable camera is used, where the pixel movement between two image views may not be known. Various stitching algorithms may be used, e.g. such as are employed when producing a panorama picture from a number of consecutive photos.

As an alternative, the step of determining the coordinates of the captured image may comprise comparing the captured image to the background model. This provides a simple and easily implemented way of finding the coordinates of the captured image in relation to the background model. The comparison may be done on an image element (pixel) per image element basis.

As another alternative, the step of determining the coordinates of the captured image may comprise accessing data relating to the view area used by the imaging device when capturing the image. This would typically be useful for a camera where a new image frame is captured by selecting another view frame within the total view accessible to the camera. The coordinates, e.g. in pixels, will then be easily available for the background model update without any calculations.

The background model may comprise information relating to the background of essentially all possible view areas of the imaging device. In this case one and the same background model may be used for all image frames captured by the camera, which further enhances the above advantages when performing the object detection.

The method may further comprise the steps of accessing data representing a second captured image of a second scene, the background of the second scene being represented by the background model, and determining coordinates of the second captured image in relation to the background model, wherein the step of updating the data of the background model comprises updating the data based on the captured image, the coordinates of the captured image, the second captured image and the coordinates of the second captured image. This would e.g. be useful in a situation where two video streams are captured by an image capturing device or when two image capturing devices are capturing images of scenes within the same background. The same background model may then be used by both video streams, meaning that only one, instead of two, background models needs to be maintained. The quality of the model will also be enhanced as image data from both streams is used to update the model.

The step of updating the data of the background model may comprise increasing an age parameter of at least some of the background model data representing the at least one area outside the captured image. In other words, the age parameter may be increased for areas to which the camera has not been pointed in a while, based on the assumption that the background model is less useful or valuable for areas monitored "long ago" than for areas that were monitored more recently and where more updated background information is available. In this way it is possible to adapt the background model so that older information may be faded, e.g. in a case where the background of a scene monitored is expected to change frequently. In some embodiments the age parameter is increased dependent on the amount of change expected to take place in said at least one area. In this way the age parameter can be increased more in an area where a lot of change is expected to take place than in an area where less change is expected to take place meaning that the background model information may be used for a longer time in an area which stays the same for a long time. The amount of change in an area may be represented by a change parameter, which may be set for different areas of the background e.g. based on accumulated statistics regarding the background image or on user input data. The above and other advantages are also achieved by a background model updater and a video analyzer according to other aspects of the invention.

The background model updater for updating a background model representing the background of a scene being captured by means of an imaging device may comprise
an image data input arranged to receive information representing a captured image of the scene,
a background model data input arranged to receive information from the background model,
a background model data output arranged to provide information to the background model for updating the model,
a coordinates determiner arranged to determine coordinates of the captured image in relation to the background model, wherein the background model comprises information representing both the background of the scene being captured and the background of at least one area outside the scene being captured, and
a background model data generator arranged to generate the background model data output based on the captured image and the coordinates of the captured image.

According to a further aspect of the invention the video analyzer may comprise a background model, an image capturing means, and a background model updater as described above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### Brief description of the drawings

Other features and advantages of the present invention will become apparent from the following detailed description of presently preferred embodiments, with reference to the accompanying drawings, in which
Fig 1 schematically illustrates components of a background model updater and a video analyzer.
Fig 2 illustrates a method for updating a background model.
Fig 3 illustrates a number of captured image frames.

### Detailed description of the invention

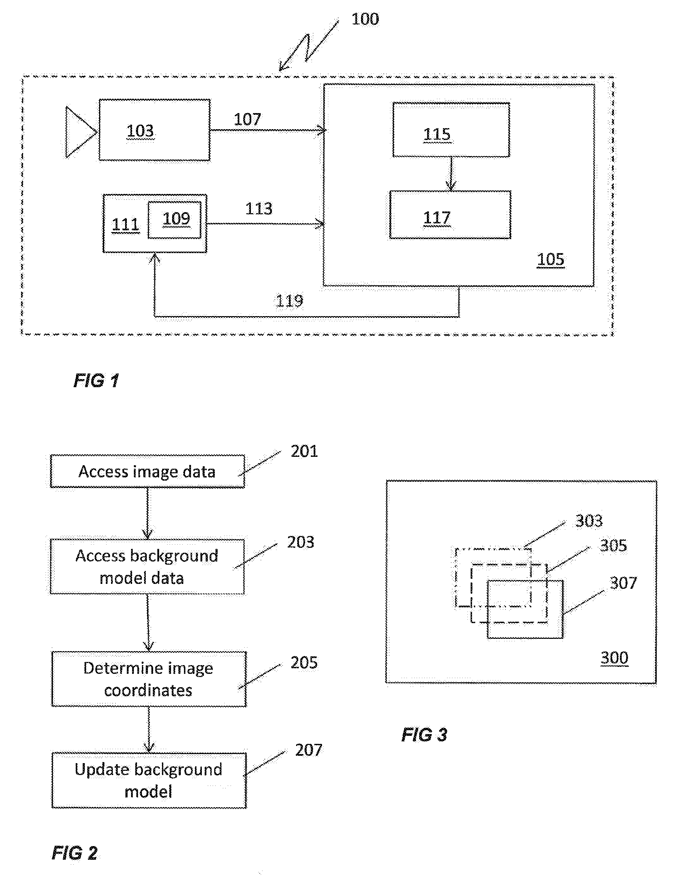

Embodiments of the present invention may be implemented in an imaging device capturing video of a scene, e.g. a mechanically or digitally pan- and tiltable surveillance camera 100, parts of which is shown in Fig 1. Alternatively, the invention may be implemented in any device implementing functions for keeping track of moving objects, e.g. in a video encoding device, a video server, a video processing device, etc.

The camera 100 includes a scene capturing means 103 arranged to capture images, e.g. in the form of video, of a scene. The scene capturing means may comprise a number of conventional components not illustrated in the figures, such as a lens, an image sensor for registering image data, an image processor for processing image data registered by the image sensor, and a memory of any suitable type such as a RAM (Random Access Memory), a hard disc drive or a flash memory etc, for storing processed image data. Image data representing captured images is fed to a background model updater 105 via an image data input 107. The background model updater 105 may be implemented in hardware, such as logic circuits, or in software, which may be executed on a Central Processing Unit (not shown) present in the camera 100.

The camera further comprises a background model 109 stored in a memory 111 of any suitable type such as a RAM (Random Access Memory), a hard disc drive or a flash memory etc. Background model data may be accessed by the background model updater 105 via a background model data input 113. The background model comprises information representing both the background of the scene being captured and the background of at least one area outside the scene currently being captured.

The background model updater 105 comprises a coordinates determiner 115 which uses the image data (possible also for one or more previously captured images) and possibly the background model 109 to determine coordinates of the captured image in relation to the background model 109. This will be further elaborated below. The background model updater also comprises a background model data generator 117 arranged to generate updated data for the background model based on the image data and the coordinates of the captured image determined by the coordinates determiner. The updated data for the background model 109 is fed via a background model data output 119 to the background model 109.

A video analyzer for analyzing video with the purpose of detecting objects and performing scene analysis by separation into background and foreground would in turn comprise the background model 109, the image capturing means 103, and the background model updater 105.

In fig 2, a method of updating a background model representing a background of a scene being captured by means of an imaging device is presented. In step 201 data representing a captured image of the scene is accessed by the background model updater 105. In step 203 background model data is accessed by the background model updater 105. In step 205 coordinates of the captured image in relation to the background model 9 are determined by the coordinates determiner 115 on basis of data of the captured image and the accessed background model data and/or on basis of previously captured images. Finally, in step 207, the background model data is updated based on the captured image and the coordinates of the captured image.

To further explain the background model used in some embodiments of the present invention, reference is now being made to Fig 3. Here an available view area 300 of a camera is illustrated. Within this view area 300, a number of image frames 303, 305, 307 are captured by the camera as its view moves within its total available view area 300.

The background model 9, which in principle corresponds to an image only comprising background elements, incorporates the background of all of the image frames 303, 305, 307, and may actually cover the entire available view area 300 for the camera.

When an image frame, such as the image frame 303, is captured by the camera, coordinates of that image frame are determined in relation to the background model 9. Depending e.g. on the type of camera, the determination of coordinates may be done in different ways. For a digitally pan- and tiltable camera, i.e. a camera which moves its view by digitally zooming to an area within its entire available view area, the coordinates are readily available and only needs to be accessed by the coordinates determiner. The coordinates may e.g. be given as pixel values. For a mechanically pan- and tiltable camera, where a camera head is physically moved or turned in relation to a camera base, a stitching algorithm may be used for determining where the new image frame is located. Stitching algorithms are known as such, and are e.g. used for producing panorama pictures, and briefly works by identifying overlapping areas between two image frames to "stitch" them together. Using this variant, image data for at least one previous image frame is stored for comparison purposes e.g. in a memory in the background analyzer 105 or in a memory (not shown) in the image capturing device 103 and accessed by the background analyzer 105 via the image data input 107. The images, such as the image frames 303 and 305, are then compared, e.g. on a pixel by pixel basis, and the overlapping area is identified. Coordinates for the new image are then determined by using the knowledge of the coordinates for the previous image in relation to the background model and the location of the overlapping area.

Yet another way of finding the location and determining the coordinates of a new image frame is to perform a comparison of the image with the entire background model. This may sometimes be useful as the stitching algorithms may not work properly in cases where there are no overlapping areas between consecutive image frames. This comparison may also e.g. be done on a pixel-per-pixel basis.

As the background model is updated and maintained over time, the separation into foreground and background, and the tracking of objects, may be done much faster than in a case when a camera moves to a new view and then has to remain there for as long as is needed to accumulate enough image history for that view to be able to separate the background and any objects and perform the scene analysis. This in turn means that the possibility of tracking moving objects is better, as the camera performs the image analysis faster and can move to a new view in shorter time than if it has to redo the scene analysis from scratch at every new view.

For those embodiments where an age parameter is present for the background data, extra processing may be performed to make sure that the background has not changed in a view where there is found to be only very old background model data. However, in many cases large parts of a background, such as buildings, roads or trees, may stay virtually the same for a very long time, meaning that in some cases the present data on the background model in a view will be very useful to the scene detection algorithms used.

A further option is to use some type of feedback algorithm in connection with the age parameter. Statistics on how much or how frequently the background model data changes may then be accumulated to determine the amount of change taking place over time in different areas (e.g. defined by one or more or image elements such as pixels). In areas where a lot of change is deemed to take place, the age parameter is then increased more rapidly than in areas where it is deemed that slower or minor or no changes take place. The amount of change could be represented by a change parameter. This change parameter could be set on a global level, for the entire background image, or different values may be set for different areas of the background. The values may be updated when new statistics indicate that this is necessary.

It would also be possible to let a user of the system define the change parameter which indicates the amount of change or the speed of change expected to occur in the background image or in different areas of the background image. This could again be set on a global level, for the entire background image, or the user could be given the opportunity to input different values for different areas (selected by the user or preset) of the background.

As an example, if one area of the background shows a building, this would likely be associated with a low change parameter, and an area which shows the street in front of the building may be set to have a higher change parameter. As another example, if the camera covers a parking lot from above, the change parameter may be set to a higher value for the access areas where cars go in and out, and to a lower value for areas with parked cars.

## Claims

1. A method of updating a background model representing a background of a scene being captured by means of an imaging device,
comprising the steps of
accessing data representing a captured image of the scene,
accessing background model data,
determining coordinates of the captured image in relation to the background model, wherein the background model comprises information representing both the background of the scene being captured and the background of at least one area outside the scene being captured,
updating the background model data based on the captured image and the coordinates of the captured image.

2. The method of claim 1, wherein the step of accessing data representing a captured image of the scene comprises accessing data representing a captured image having at least one image area overlapping at least part of a previously captured image for which coordinates in relation to the background model are known, and
wherein the step of determining the coordinates of the captured image comprises comparing the captured image to the previously captured image to determine the coordinates of the overlapping area in relation to the previously captured image and thereby determining the coordinates of the captured image in relation to the background model.

3. The method of claim 1 or 2, wherein the step of determining the coordinates of the captured image comprises comparing the captured image to the background model.

4. The method of claim 1, wherein the step of determining the coordinates of the captured image comprises accessing data relating to the view area used by the imaging device when capturing the image.

5. The method of any of the preceding claims, wherein the background model comprises information relating to the background of essentially all possible view areas of the imaging device.

6. The method of any of the preceding claims, further comprising the steps of accessing data representing a second captured image of a second scene, the background of the second scene being represented by the background model,
determining coordinates of the second captured image in relation to the background model, and
wherein the step of updating the data of the background model comprises updating the data of the background model based on the captured image, the coordinates of the captured image, the second captured image and the coordinates of the second captured image.

7. The method of any of the preceding claims, wherein the step of updating the data of the background model comprises increasing an age parameter of at least some of the background model data representing the at least one area outside the captured image.

8. The method of claim 7, further comprising increasing the age parameter dependent on the amount of change expected to take place in said at least one area.

9. A background model updater for updating a background model representing the background of a scene being captured by means of an imaging device,
the background model updater comprising:
an image data input arranged to receive information representing a captured image of the scene,
a background model data input arranged to receive information from the background model,
a background model data output arranged to provide information to the background model for updating the model, **characterized by**
a coordinates determiner arranged to determine coordinates of the captured image in relation to the background model, wherein the background model comprises information representing both the background of the scene being captured and the background of at least one area outside the scene being captured, and
a background model data generator arranged to generate the background model data output based on the captured image and the coordinates of the captured image.

10. The background model updater of claim 9, wherein
the image data input is arranged to receive information representing a captured image having at least one image area overlapping at least part of a previously captured image for which coordinates in relation to the background model are known, and
the coordinates determiner is arranged to determine the coordinates of the captured image by comparing the captured image to the previously captured image to determine the coordinates of the overlapping area in relation to the previously captured image and thereby determine the coordinates of the captured image in relation to the background model.

11. The background model updater of claim 9 or 10, wherein the coordinates determiner is arranged to determine the coordinates of the captured image by comparing the captured image to the background model.

12. The background model updater of claim 9, wherein the coordinates determiner is arranged to determine the coordinates of the captured image by accessing data relating to a view area used by the imaging device when capturing the image.

13. The background model updater according to any of claims 9-12, wherein the background model data generator is arranged to increase an age parameter of at least some of the background model data representing the at least one area outside the captured image.

14. The background model updater according to claim 13, wherein the background model data generator is arranged to increase the age parameter dependent on the amount of change expected to take place in said at least one area.

15. Video analyzer comprising:
a background model,
an image capturing means, and
a background model updater according to any of claims 9-14.
